## Europäisches Patentamt
## European Patent Office
## Office européen des brevets

(19)

(11) Publication number: **0 087 227**
**A1**

(12)

# EUROPEAN PATENT APPLICATION

(21) Application number: **83300472.4**

(22) Date of filing: **28.01.83**

(51) Int. Cl.³: **F 16 L 13/00**
**F 16 B 4/00, H 01 B 17/58**
**H 02 G 1/16**

(30) Priority: **28.01.82 US 344275**

(43) Date of publication of application:
**31.08.83 Bulletin 83/35**

(84) Designated Contracting States:
**AT BE CH DE FR IT LI NL SE**

(71) Applicant: **RAYCHEM CORPORATION**
**300 Constitution Drive**
**Menlo Park California 94025(US)**

(72) Inventor: **Holmes, James Crawford**
**601, Connecticut Street**
**San Francisco California 94107(US)**

(72) Inventor: **Bush, Harvey**
**2526, West Middlefield Road**
**Mountain View California, 94043(US)**

(72) Inventor: **Fink, Roger Lloyd**
**151, Lakeview Way**
**Redwood City California 94062(US)**

(74) Representative: **Benson, John Everett et al,**
**Raychem Limited Morley House 26 Holborn Viaduct**
**London EC1(GB)**

(54) Wraparound sleeve.

(57) A wraparound sleeve (20), preferably recoverable, has a profiled edge (24) which is enveloped when the closure is wrapped around an elongate substrate (8). Repeating structural units (26) along the profiled edge (24) comprise spoiler-edges (28) which run substantially at right angles to the edge, and cause air trapped along the edge to form into discrete pockets (30).

Fig.2.

## WRAPAROUND SLEEVE

This invention relates to protecting an elongate substrate, and more particularly to protecting an elongate substrate with a wraparound protective closure comprising a sleeve having closure members and a flap which underlies them when the flap is in the wrapped-around configuration.

Wraparound protective closures (i.e., wraparound sheets and tapes, hereinafter referred to collectively as "sheets" or as "wraparound sheets") are widely used as protective closures in the pipe, electrical power distribution, and telecommunications industries for environmentally sealing and/or electrically insulating a pipe, conduit, cable, or the like. Wraparound sheets for elongate substrates may have opposing edges, and when such a sheet is wrapped around an elongate substrate, such as a pipe, conduit,cable, one edge may abut or be overlapped by the opposing edge. As the edges are overlapped,the thickness of the underlying layer causes the upper layer to ride up and over the underlying layer forming a bridge, thereby defining a gap or channel in which air can be trapped. This channel is a potential leak-path through which water may permeate and come into direct contact with the elongate substrate in need of protection, particularly if the channel is continuous.

The continuous-channel leak-path problem may become especially pronounced when the wraparound sheet is fabricated of heat-shrinkable material. The volume of air trapped as the overlapping edges create a gap, is believed to be augmented by air aspirated into the
channel and trapped as dimensional-recovery elongates
the bridge-gap.   In the case of heat-shrinkable polymeric
wraparound sheets for pipes which use mastics as a means
to seal the sheet to the pipe, the problem has been
observed to become significant at pipe diameters above
25cm.

Numerous wraparound sleeves are known in the art,
refer for example, to U.S. Patents numbers 3,455,336 to
R.H. Ellis, 3,574,313 to K. Tanaka, 3,770,556 to J.H.
Evans et al, and 4,200,676 to Caponigro et al, and U.K.
1,506,242 to J.G. Robinson et al, all of which are
herein incorporated by reference. Tanaka, Evans et
al, and Robinson et al show wraparound sheets having at
their edges respectively: tabs and slots for closure,
slits to prevent buckling during heat recovery, and
protrusions and recesses for interlocking engagement.
None of these references addresses the channel leak-path
problem.

The instant invention is able to provide a solution
to the channel leak-path problem encountered when
wraparound sleeves are overlappingly wrapped around
elongate substrates, such as pipes, conduits or cables,
and to allow greater flap flexibility for a given size
of flap.  A channel leak-path is a  functional problem
primarily when, and in direct proportion to the degree
to which, the channel is continuous.  Trapped air
is generally harmless so long as it is trapped in
discrete pockets.

The present invention therefore provides a wraparound
sleeve for enclosing a substrate, having;

(a) first and second edge portions provided with closure members that can be secured together to maintain the sleeve in a wrapped-around configuration;

(b) a flap which can underlie and bridge the edge portions when the sleeve is in a wrapped-around configuration to form a seal between them and running lengthwise of them;

(c) means for providing a non-linear edge to a bond line between the flap and at least the first edge portion, thereby resisting the formation of a continuous leak-path between the substrate, the flap and the first edge portion.

The flap may be intergral with the second edge portion or may be supplied bonded or otherwise affixed to it; a seal between the flap and the first edge portion of course being formed after the sleeve is wrapped around the substrate. The first and second edge portions may interlock, but a preferred technique involves the use of a separate member to hold them together. An example of this is disclosed in Ellis, UK Patent 1155470, where the edge portions comprise upstanding rails running the length of the sleeve, and the separate member is a channel, C-shaped in cross-section, which is slid over them after they have been brought together. In this case, one rail can be positioned a short distance from the extreme edge of the sleeve material so that the part between the rail and that edge constitutes an integral flap. Alternatively, the flap may be provided as a discrete member, in which case it will be desirable that a non-liner edge to the bond line be provided between the flap and each of the first and second edge portions.

The non-liner edge to the bond line may arise simply through the flap having a non-liner edge. Various preferred shapes are described below. An alternative technique is to provide an adhesive on the flap which has a non-linear boundary. Another technique is to provide an attachment to the flap which follows a non-linear path, or has non-linear outline.

In addition to the beneficial effects of break-up the leak path, we have found a further suprising result: by provding the flap with a non liner edge a greater degree of flap flexibility can be achieved for a given sealing capability. This is of significant benefit when the sleeve is used to cover substrates of non-uniform cross-section, such as splices in telecommunications cables. In such situations the sleeve is forced to follow the change in cross-section in order to provide the desired tight environmental seal, and a flap of insufficient flexibility may kink and cause an overlying part of the sleeve to split. This problem can be substantially reduced and in most cases can be entirely aliminated by using a sleeve of the present invention.

The invention also provides a method of enclosing a substrate, which comprises;

(a) wrapping around the substrate a sleeve of the invention;

(b) securing the first and second edge portions together;

(c) bringing the sleeve into engagement with the subject thereby causing a leak-path between the substrate and the sleeve to become discontinuous.

When the wraparound sleeve is recoverable, step (c) comprises causing recovery of the sleeve which brings the sleeve into engagement with the substrate. When the sleeve is heat-recoverable, recovery is caused by heating. In any case, the method may further comprise the step of interposing a bonding means between the sleeve and the substrate before wrapping the closure member around the substrate.  Also, a liner may be provided between the sleeve and at least part of the substrate.  This is done when a telecommunications cable splice is being enclosed since it is desirable to protect the delicate electrical connections from the recovery forces of the sleeve.

The invention is further illustrated with reference to the accompanying drawings in which:

FIGURE 1 is a perspective view of a pipe around which has been installed a prior art  wraparound closure;

FIGURE 2 is a perspective view of a pipe protected by a wraparound protective closure having a profiled transverse-edge in accordance with this invention;

FIGURE 3 is a perspective, partial break-away view of a pipe protected by a wraparound sleeve having an alternative profiled edge;

FIGURE 4 is a perspective, partial break-away view of a pipe protected by a wraparound sleeve having a profiled edge formed from a metal wire;

FIGURE 5 is a perspective, partial break-away view of a pipe protected by a wraparound sleeve having a profiled edge formed from a metal foil;

FIGURE 6 is a perspective, partial break-away view of a pipe protected by a wraparound sleeve having a profiled edge formed from strips of compressible foam.

The wraparound sleeves of this invention are in sheet form, which includes sheets of any shape, such as those which have been die cut to fit the general contours of an elongate substrate having a diameter which varies along its length, or those which are formed from tapes. Regardless of the form of the sheets of this invention, they are wraparound sheets and have opposing edges capable of being secured together to maintain the sleeve in a wrapped-around configuration. These edges may interlock, be lap bonded, butt bonded, or held together by a separate closure member, or otherwise be held together.

The edges to be brought together will generally extend in a direction which is substantially parallel to the axis of the substrate, this being especially true when the wraparound sheet is rectangular. When the sheet is in tape form, the edges regarded as being brought together are the long edges, which form an angle of less than $90^\circ$ with the axis of the substrate, since the tape is spirally wound around the circumferance of the substrate.

The present invention may be used with advantage for internal coatings of hollow substrates as well as for external coatings, since the same problem of leak-path can arise in both cases.

The wraparound sleeves of this invention may be composed of any material or composite of materials capable of existing in sheet form as defined herein. For example, sheets of the same or different composition may be juxtaposed and/or laminated together under heat or pressure or both. Alternatively, materials may be blended into a mixture and/or reacted and subsequently be formed into sheets, such as by casting, extruding, calendaring, etc. Polymeric compositions are especially preferred.

The sleeve is preferably fabricated from materials which may be rendered recoverable, which materials are well known and can be formed into articles such as sheets by known methods and caused to recover by any of several methods. Polymeric heat-recoverable materials and articles formed therefrom are disclosed, for example, in U.S. Patent Nos. 2,027,962 to Currie and 3,086,242 to Cook et al, both of which are herein incorated by reference. The recoverable material can be, for example, polyethylene, polyvinyl chloride, polyvinylidene fluoride, or the like. Cross-linked polyethylene is preferred.

"Memory metal" heat-recoverable materials and articles formed therefrom are disclosed for example in U.S. Patent Nos. 3,783,037 to Brook et al and 3,802,930 to Brook et al, both of which are herein incorporated by reference. The recoverable material can be, for example, various alloys of titanium and nickel, beta-brass alloys, and 304 stainless steels.

Recoverable articles are also known which do not require the application of heat. Such articles are disclosed, for example, in U.S. Patent Nos. 4,070,746 to Evans et al, 4,135,553 to Evans et al and 4,179,320 to Midgley et al, all of which are herein incorporated by reference.

The sleeves of this invention are most preferably fabricated from materials which may be rendered into heat-shrinkable articles such as those referenced in the preceding paragraphs. Such heat-shrinkable articles have been "locked" into a heat-unstable shape or configuration and may be caused to return to a heat-stable shape or configuration by the application of heat. Expanded polymeric articles will shrink back to or towards the original heat-stable configuration or to some new configuration when heated to a temperature above their crystalline melting temperature, for example, about $115^{O}C$ in the case of polyethylene. Deformed memory metal articles will recovery to or towards the original heat-stable configuration when heated to a temperature above their martensitic to austenitic transition temperature.

The sleeves according to this invention may further comprise a bonding means interposed between the sheet material and the elongate substrate. The bonding means may comprise a mastic and/or an adhesive. When the bonding means comprises an adhesive, it may be (by way of illustration but not limitation) a pressure sensitive adhesive or a heat-activatale adhesive such as a hot-melt adhesive. When the sleeve is heat recoverable, the bonding means preferably comprises a heat-activatable adhesive, especially a hot-melt adhesive whose tack temperature does not exceed the recovery temperature of the heat-recoverable closure.

The unique feature of the sleeves of this invention is their profiled longitudinal edge. As discussed in more detail hereinafter, the profiled edge may take many forms. The edge may be formed from a straight edge, for example, by die-cutting repeating structural units (further defined hereinafter) into the edge, by juxtaposing a fringe strip to the edge (such as an fringe strip comprised of bent metal wire or a continuous yarn of organic or inorganic material such as polyester or fiberglass juxtaposed by sewing), by overlapping the edge with a fringe strip (such as a fringe strip comprised of metal foil), or by providing strips (such as foam strips) along the edge, which straddle the edge and extend perpendicularly out therefrom.

The profiled edges of this invention preferably consist of repeating structural units, each unit having a least one spoiler-edge. Each spoiler-edge runs substantially at right angles to the longitudinal edge and has a length equal to at least twice the thickness of the sheet. Moreover, corresponding spoiler-edges of adjacent repeating structural units are spearated by a distance of at least twice the length of the spoiler-edge, and not more than half of the area between the corresponding edges is occupied. In this preferred embodiment each unit has the characteristics mentioned, but the units need not (although conveniently will be) otherwise identical.

In a further preferred embodiment of this invention the profiled edge may have repeating structural units comprising a pair of spoiler-edges whose outermost (with respect to the rest of the sheet) adjacent points are interconnected by a straight portion which extends at right angles from one spoiler-edge to the other spoiler-edge. In another embodiment, the repeating structural units may comprise one spoiler-edge, adjacent spoiler-edges being connected by a diagonal position which extends from the outermost point of one spoiler-edge to the innermost point of the adjacent spoiler-edge.

A method of protecting an elongate substrate thus comprises the steps of:(a) providing a wraparound protective closure according to this invention as previously described, (b) wrapping the closure around the elongate substrate so that the profiled edge is in physical contact with the substrate and is adjacent an opposing edge, and (c) simultaneously causing air trapped along the enveloped edge to form into discrete pockets away from the spoler-edges as the closure is installed. When the closure is a recoverable wraparound sleeve, installation will comprise recovering it into engagement with the substrate. Air trapped at the edges that are brought together is caused to form into discrete pockets away from the spoiler-edges.

It is the profiled edges of the closures of this invention which causes air trapped along the enveloped transverse-edge to form into discrete pockets. Prior art closures, however, tend to cause air to be trapped as a continuous channel or channels, thereby providing a leak-path.

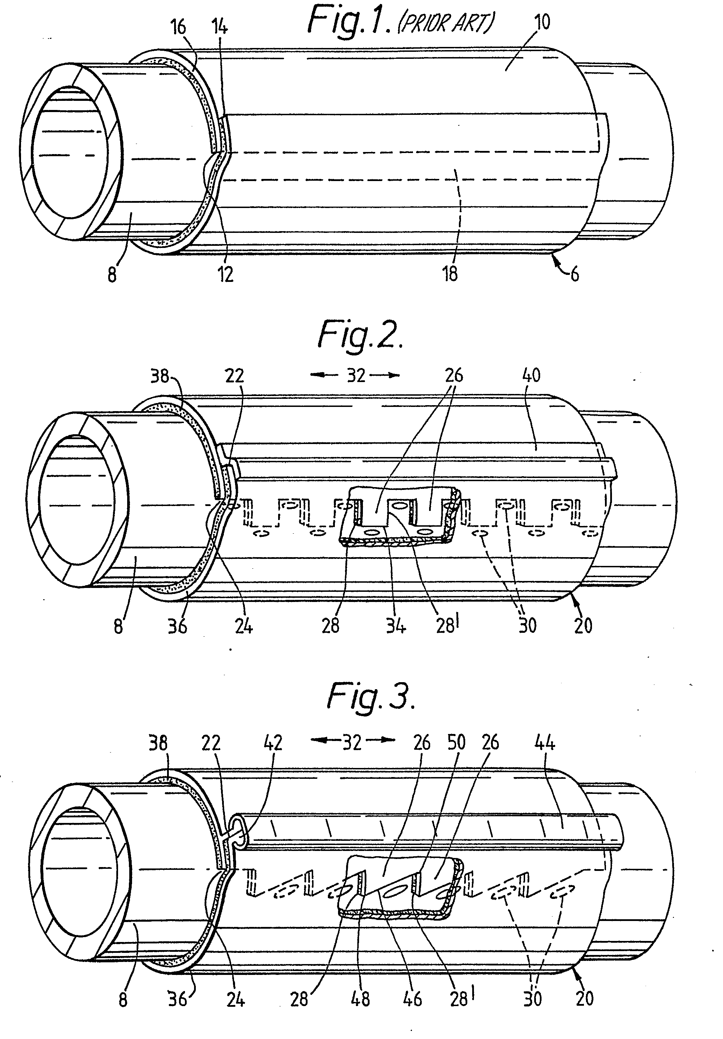

Figure 1 illustrates a typical prior art wraparound sleeve shown generally at 6, installed around a pipe 8. The closure 6 in this example consists of a polymeric sheet 10 having opposing edges 12 and 14, shown as straight edges. Sheet 10 is coated with an adhesive 16. The closure 6 is overlappingly wrapped around pipe 8, with the adhesive side facing the surface of pipe 8 to be protected (i.e., in this example, the external surface of pipe 8).

The overlapping of edges 12 and 14 forms a bridge as edge 14 rides up and over the enveloped edge 12, which defines a gap along the enveloped edge 12. A continuous channel of air shown generally at 18 is often trapped in the gap so formed. This channel is a potential leak-path through which water may permeate and come into direct contact with the substrate in need of protection and illustrates the problem addressed and solved by the instant invention.

The continuity of the channel of trapped air destroys the environmental seal between the pipe and sleeve,thereby allowing moisture to penetrate into an area where it is least tolerated.  The leak-path problem is especially pronounced when the closure is fabricated from heat-shrinkable materials.  These shrinkable materials have superior environmental sealing capability because of their ability to conform to the underlying substrate, especially if they are polymeric shrinkable materials, but the volume of air trapped as the overlapping edges 12 and 14 create a bridge and gap, is believed to be augmented by air aspirated into the channel and trapped as dimensional recovery elongates the bridge and gap.  The instant invention modifies the closures of the prior art to solve the channel leak-path problem.

Five embodiments of the instant invention are shown in Figures 2 through 6.  These embodiments eliminate the continuous-channel leak-path problem by providing a profiled edge having spoiler-edges which cause air to be trapped in harmless discrete pockets.  Each wraparound protective sleeve 20 has a pair of opposing edges 22 and 24.  Edge 24 is profiled edge which is enveloped by the opposing edge 22 as the sleeve 20 is overlappingly wrapped around an elongate substrate, shown as a pipe 8. The profiled edge 24 of each of the five embodiments, comprises a plurality of repeating structural units 26 along said edge 24, each structural unit 26 being comprised of at least one spoiler-edge 28.  As the sleeve is overlappingly wrapped, the air trapped along the enveloped and profiled edge 24 is caused to form into harmless discrete pockets 30 away from the spoiler-edges 28. Thus at least two repeating structural units 26, each having at least one spoiler edge 28 are required by this invention, one for each extremity of the enveloped and profiled edge 24.

Referring to Figure 2, the first and preferred embodiment of this invention is illustrated as a sleeve 20 having a profiled edge with a castellated configuration. Each structural unit 26 comprises a pair of spoiler-edges 28 and 28', which run substantially at right angles to the longitudial direction 32 of the sleeve and whose outermost adjacent points are interconnected by a straight portion 34 which extends at right angles from one spoiler-edge 28 to the other spoiler-edge 28'.

The sleeve 20 is shown in Figure 2 as a heat-shrinkable polymeric closure member in sheet form 36 onto which has been coated an adhesive 38. After overlappingly wrapping the sleeve 20 around the pipe 8, so that the profiled edge 24 is in contact with the pipe 8 and is enveloped by the opposing edge 22, dimensional-recovery into engagement with the pipe 8 is caused by heating the sheet 36 to its recovery temperature. As the sheet 36 shrinks into engagement with the pipe 8, air trapped along the enveloped edge 24 is simultaneously caused to form into discrete pockets 30 away from the spoiler-edges 28. A typical distribution of discrete air pockets 30 for this first embodiment of the instant invention is shown.

With continuing reference to Figure 2, a patch 40 (such as a patch disclosed in U.S. Patent No. 4,200,676 to Caponigro et al) is shown positioned over edge 22. The precise design of patch is not critical. In Figure 3, as an additional example, by way of illustration but not limitation, the sheet 36 has rails 42 which cooperate with a channel 44 to hold opposing edges 22 and 24 together, such as taught in U.S. Patent No. 3,455,336 to Ellis.

Referring to Figure 3, a second embodiment of this invention is illustrated as a sleeve 20 having a profiled edge with a sawtooth configuration, e.g., a series of right-triangular structural units 26 cut into the edge to form the profiled edge 24. Each repeating structural unit 26 comprises one spoiler-edge 28 running substantially at right angles to the direction 32. Adjacent spoiler-edges 28 and 28'are interconnected by a diagonal portion 46 which extends from the outermost point 48 of the spoiler-edge 28 to the innermost point 50 of the adjacent spoiler-edge 28'. A typical distribution of air pockets 30 for this second embodiment is shown.

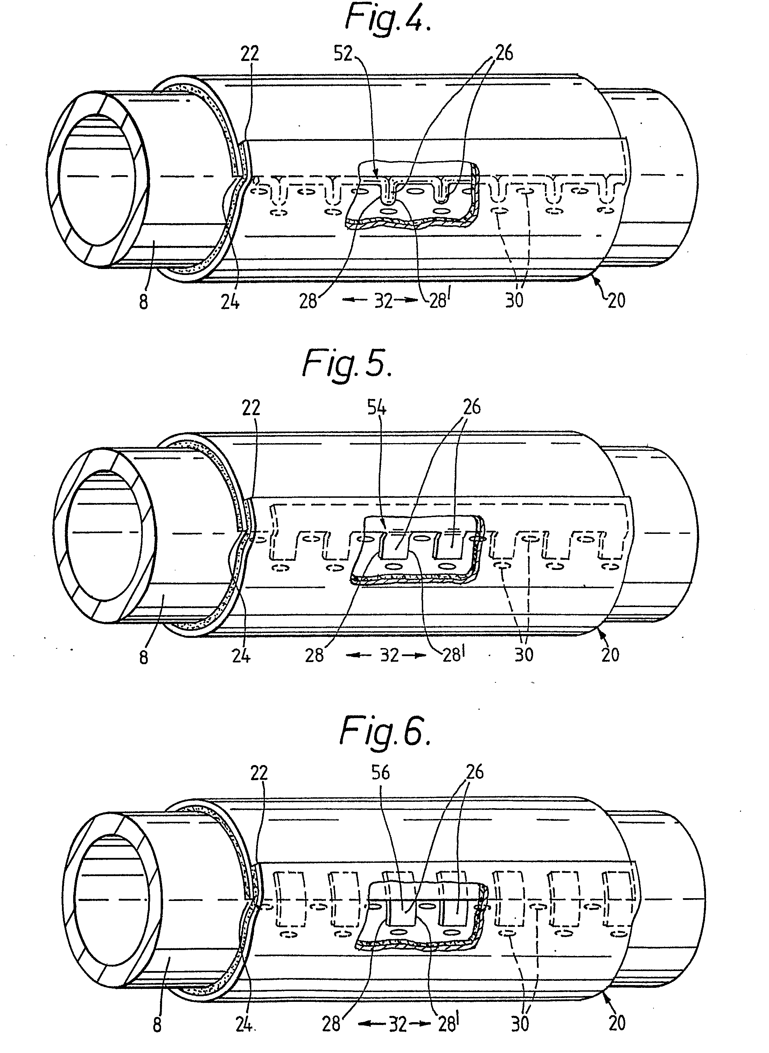

Referring to Figure 4, a third embodiment of the instant invention is illustrated as a sleeve 20 wherein the repeating structural unit 26 is provided by a fringe strip shown generally at 52, positioned at the straight edge to be enveloped. The fringe strip 52 may be comprised of a bent metal wire (as shown), of an organic or inorganic strand or yarn, such as a fiberglass yarn, of a metal foil, or the like. The fringe strip 52 may be attached to the edge by an attachment means, such as by a mastic or an adhesive, by sewing, or by mechanical devices such as hooks. Each repeating structural unit 26. comprises a pair of spoiler-edges 28 and 28'. A typical distribution of discrete air pockets 30 for this third embodiment is shown.

Referring to Figure 5, a fourth embodiment of this invention is illustrated as a sleeve 20 having a profiled edge wherein the repeating structural units 26 are provided by a fringe strip shown generally at 54, placed on the surface of the sleeve 20 remote from the elongate substrate and straddling the edge to be enveloped, thereby forming the profiled edge 24. The fringe strip 54 may be comprised of a metal foil, a fabric (such as a woven fiberglass fabric) cut into a fringe strip, or a continuous strand of yarn formed into a fringe strip. it may be attached to the straight edge by an attachment means, such as a mastic or an adhesive. Each repeating stuctural unit 26 comprises a pair of spoiler-edges 28 and 28'. A typical distribution of discrete air pockets 30 for this fourth embodiment is shown.

Referring to Figure 6, a fifth embodiment of this invention is illustrated as a sleeve 20 wherein the repeating structural units 26, each comprising a pair of spoiler edges 28 and 28', are provided by two or more compressible foam strips 56, each having an adhesive layer 58 (not shown) for securing the foam strip to the surface of the sleeve which will contact the pipe 8. The foam strips 56 straddle the edge to be enveloped and extend perpendicularly out from it. Where only two of the compressible foam strips are employed they are preferably positioned near the outer extremities of the edge. A typical distribution of discrete air pockets 30 for this fifth embodiment is shown.

CLAIMS

1.    A wraparound sleeve for enclosing a substrate,
having;

(a) first and second edge portions provided with
closure members that can be secured together to
maintain the sleeve in a wrapped-around configuration;

(b) a flap which can underlie and bridge the edge
portions when the sleeve is in a wrapped-around
configuration to form a seal between them and
running lengthwise of them;

(c) means for providing a non-linear edge to a bond
line between the flap and at least the first edge
portion, thereby resisting the formation of a
continuous leak-path between the substrate, the
flap and the first edge portion.

2.    A sleeve according to Claim 1, which comprises a
recoverable polymeric material.

3.    A sleeve according to Claim 1 or 2, in which the
flap is integral with the second edge portion.

4.    A flap according to any of Claims 1,2 or 3, in
which the means (c) comprises a non-linear edge to the
flap.

5.    A sleeve according to any of the preceding claims,
in which the means (c) comprises an adhesive coating on
the flap which has a non-linear boundary.

6.    A sleeve according to any of the preceding claims,
in which the means (c) comprises a non-linear attachment
to the flap.

7. A sleeve according to any preceding claim, in which the non-linear edge has the general form of a sine wave, a sawtooth or a square wave.

8. A sleeve according to any preceding claim, which has a coating of an adhesive on a surface thereof.

9. A wraparound sleeve for enclosing a substrate, having:

(a) first and second edge portions, an edge at one edge portion being non-linear and being enveloped when the closure member is overlappingly wrapped around the substrate, said non-linear edge having repeating structural units, each unit having at least one spoiler-edge, said spoiler-edges running substantially at right angles to the direction of the non-linear edge and having a length equal to at least twice the thickness of the sleeve, wherein corresponding spoiler-edges of adjacent repeating structural units are separated by a distance at least twice the length of the spoiler-edge and not more than half of the area between the corresponding edges is occupied.

10. A sleeve according to Claim 9, which comprises a recoverable polymeric material.

11. A sleeve according to Claim 9 or 10, in which each repeating structural unit comprises a pair of spoiler-edges whose outermost adjacent points are interconnected by a straight portion which extends at right angles from one spoiler-edge to the other spoiler-edge.

12. A sleeve according to Claim 9 or 10, in which each repeating structural unit comprises one spoiler-edge, adjacent spoiler-edges being connected by a diagonal portion which extends from the outermost point of one spoiler-edge to the innermost point of the adjacent spoiler-edge.

13. A sleeve according to Claim 9 or 10, in which the repeating structural units are provided by a fringe strip juxtaposed to the edge to be enveloped, thereby forming the profiled edge.

14. A sleeve according to Claim 13, in which the fringe strip comprises bent metal wire.

15. A sleeve according to Claim 13, in which the fringe strip comprises a continuous strand of yarn.

16. A sleeve according to Claim 15, in which the continuous strand of yarn comprises fibreglass.

17. A sleeve according to Claim 15, in which the continuous strand of yarn is juxtaposed to the edge by sewing therethrough to form the non-linear edge.

18. A sleeve according to Claim 13, which further comprises an attachment means for attaching the fringe strip to the edge.

19. A sleeve according to Claim 18, in which the attachment means comprises a mastic or an adhesive.

20. A sleeve according to Claim 9 or 10, in which the repeating structural units are provided by a fringe strip placed on the surface of the sleeve remote from the substrate and straddling the edge to be enveloped, thereby forming the non-linear edge.

21. A sleeve according to Claim 20, in which the fringe strip comprises a metal foil.

22.   A sleeve according to Claim 20, which further comprises an attachment means for attaching the fringe strip to the edge.

23.   A sleeve according to Claim 22, wherein the attachment means comprises a mastic or an adhesive.

24.   A sleeve according to Claim 9 or 10, in which the repeating structural units are provided by two or more compressible foam strips, each having an attachment means for attaching the foam strip to the surface of the closure which will contact the substrate, the foam strips straddling the edge to be enveloped and extending perpendicularly out from said edge.

25.   A sleeve according to Claim 24, in which the attachment means comprises a mastic or an adhesive.

26.   A method of enclosing a substrate, which comprises;
        (a) wrapping around the substrate a sleeve according to any of Claims 1-25;
        (b) securing the first and second edge portions together;
        (c) bringing the sleeve into engagement with the substrate thereby causing a leak-path between the substrate and the sleeve to become discontinuous.

27.   A method according to Claim 26, in which the sleeve is recoverable and step (c) comprises causing recovery of the sleeve.

28.   A method according to Claim 27, in which the sleeve is heat-recoverable and has a coating of a heat-shrinkable adhesive on a surface that will face the substrate, the method comprising heating the sleeve after step (b).

29. A method according to Claim 26,27 or 28, in which the substrate is a telecommunications cable, or a joint between telecommunications cables.

30. A method according to Claims 26,27 or 28, in which the substrate is a pipe or a joint between pipes.

0087227

1/2

Fig.1. (PRIOR ART)

Fig.2.

Fig.3.

_Fig.4._

_Fig.5._

_Fig.6._

| | DOCUMENTS CONSIDERED TO BE RELEVANT | | EP 83300472.4 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>DE - A1 - 2 615 683</u> (RAYCHEM CORP)<br><br>* Fig. 2,9A *<br><br>-- | 1,6,7, 26,27, 29,30 | F 16 L 13/00<br><br>F 16 B 4/00<br><br>H 01 B 17/58<br><br>H 02 G 1/16 |
| Y | <u>DE - A1 - 2 938 270</u> (HIGH VOLTAGE <u>ENGINEERING CORP.</u>)<br><br>* Fig. 1-3 *<br><br>-- | 1,2,5, 26,27, 29,30 | |
| Y,P | <u>GB - A - 2 083 582</u> (DORYOKURO <u>KAKUNENRYO KAIHATSU JIGYODAN</u>)<br><br>* Totality *<br><br>-- | 1,2,5, 26,27, 29,30 | |
| Y | <u>GB - A - 1 527 282</u> (SIGMAFORM CORP.)<br><br>* Totality *<br><br>-- | 1,2,5, 26,27, 29,30 | |
| | | | TECHNICAL FIELDS SEARCHED (Int. Cl. ³) |
| A | <u>FR - A1 - 2 339 239</u> (POST OFFICE)<br><br>* Fig. 4,5,7 *<br><br>---- | 1,6,7, 29 | F 16 L 13/00<br><br>F 16 L 19/00<br><br>F 16 L 21/00<br><br>F 16 L 25/00<br><br>F 16 L 37/00<br><br>F 16 L 55/00<br><br>F 16 B 4/00<br><br>F 16 B 11/00<br><br>H 01 B 17/00<br><br>H 01 B 19/00<br><br>H 02 G 1/00<br><br>H 02 G 15/00 |

The present search report has been drawn up for all claims

| Place of search | Date of completion of the search | Examiner |
|---|---|---|
| VIENNA | 05-04-1983 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82